# EUROPEAN PATENT APPLICATION

(11) **EP 1 323 583 A1**
(43) Date of publication of application: **02.07.2003**
(21) Application number: 02002401.4
(22) Date of filing: 31.01.2002
(51) Int. Cl.: B60R 1/12, B60Q 1/26, G02B 5/124

(54) **Rear view mirror with retroreflective function**

(30) Priority: 21.12.2001 CN 01144768
(71) Applicant: Hubblevision Co., Ltd., Taichung Hsien, Taiwan (CN)
(72) Inventor: Hsu, Chen-Hsun, Taichung Hsien, Taiwan (CN)
(74) Representative: Grünecker, Kinkeldey, Stockmair & Schwanhäusser Anwaltssozietät

(57) **Abstract**

A rear view mirror with retroreflective function is disclosed. The rear view mirror comprises a first smooth surface (14) which is coated with at least one layer of film. The at least one layer of film may reflect, at least partially, some visible light (34) with a wavelength within a predetermined range and let, at least partially, some other visible light (30) with a wavelength within a predetermined range pass through; a second surface (18) opposing to the first smooth surface (14) and having a plurality of prisms (20) thereon; and an impermeable cover (24) provided on the second surface (18). Accordingly, the rear view mirror can still perform the original rear viewing function by reflecting appropriate amount of the visible lights (34). Furthermore, the rear view mirror also provides the warning function of a retroflective plate by letting some of the visible lights (30) pass through the first smooth surface (14) and reach the second surface (18) which can retroreflect the light rays along their original incoming path.

## Description

### Background of the invention

### Field of the Invention

This invention is related to a rear view mirror with retroreflective function that may not only provide the vehicle driver the original function of rear viewing, but also the function of a retroreflective plate that reflects selected light rays from the vehicle lights in the rear and returns the light rays along their original incoming path. Thus, the rear view mirror of this invention improves the overall warning effects of the vehicle to the vehicles in the rear, and combines functions of conventional rear view mirror and retroreflective plate to improve traffic safety.

### Background Art

Retroreflective plates are widely employed for a variety of safety and decorative purposes, and are particularly useful when the need for night time visibility is important under conditions of low ambient light. In most retroreflective plates, the light rays impinging upon the front surface of the plates are returned towards the light source in a substantially parallel path. In some other retroreflective plates, the reflected light can be diverged by slightly modifying the reflection angle so as to be observed in a wider range. The retroreflective plates can be used on road warning signs or light reflectors on various vehicles to achieve the decorative and safety purposes.

The outer surface of the retroreflective plate is generally a flat or an arcuate plane while the inner side of the retroreflective plate forms a plurality of prisms. Each prism has a sharp tip formed by three inclined faces which are substantially perpendicular to one another. Persons skilled in the art should be familiar with the principle of total reflection by the retroreflective plate. Since the refraction coefficient of the retroreflective plate and the refraction coefficient of the ambient air are different from each other, the incident light from the outer surface onto the retroreflective plate can be totally reflected within the prisms, and be sent back through the outer surface into the air, as long as the angle between the incident light and the prisms is properly designed and formed.

On the other hand, the existing rear view mirror for vehicles usually provides the driver a single function of rear viewing the circumstance in the rear or around the sides of the vehicle by a mirror. Some modern vehicles add side lamps at the front side of their rear view mirrors to increase the warning effects to the persons in the front or around the sides of the vehivle. Therefore, it is obvious that increasing the warning function has always been one of the important measures to improve traffic safety.

### Summery of the Invention

It is a primary object of this invention to combine the conventional rear view mirror and retroreflective plate to develop a rear view mirror with retroreflective function that may not only provide the vehicle driver the original function of rear viewing, but also the function of the retroreflective plate that reflects selected light rays from the vehicle lights in the rear and returns the light rays along their original incoming path. Thus, the rear view mirror of this invention has the function of retroreflective plate to increase the warning effects to the vehicle in the rear and improve traffic safety.

According to the primary object, this invention provides a rear view mirror with retroreflective function. The rear view mirror comprises a first smooth surface which is coated with at least one layer of film. The at least one layer of film may be a metallic material or a dielectric material, that reflects, at least partially, some visible light with a wavelength within a predetermined range and lets, at least partially, some other visible light with a wavelength within a predetermined range pass through; a second surface opposing to the first smooth surface and having a plurality of prisms thereon; and an impermeable cover provided on the second surface. Accordingly, this invention can still provide the original rear viewing function by reflecting appropriate amount of the visible lights. Furthermore, this invention also provides the warning function of a retroflective plate by letting some of the visible lights pass through the first smooth surface and reach the second surface which can retroreflect the light rays along their original incoming path.

The special features and characteristics of this invention can be further realized by referring to the appended drawings and explanations of the preferred embodiments.

### Brief description of drawings

Fig. 1 is a schematic cross sectional view illustrating a preferred embodiment according to the present invention;
Fig. 2 is a schematic cross sectional view illustrating another preferred embodiment according to the present invention;
Fig. 3 is a schematic view showing the optical characteristics of one dielectric film utilized in the present invention;
Fig. 4 is a schematic view showing the optical characteristics of another kind of dielectric film;
Fig. 5 is a schematic view showing the optical characteristics of a film made according to one preferred embodiment of the present invention; and
Fig. 6 is a schematic view showing the optical characteristics of one metallic film utilized in the present invention.

### Detailed description of the invention

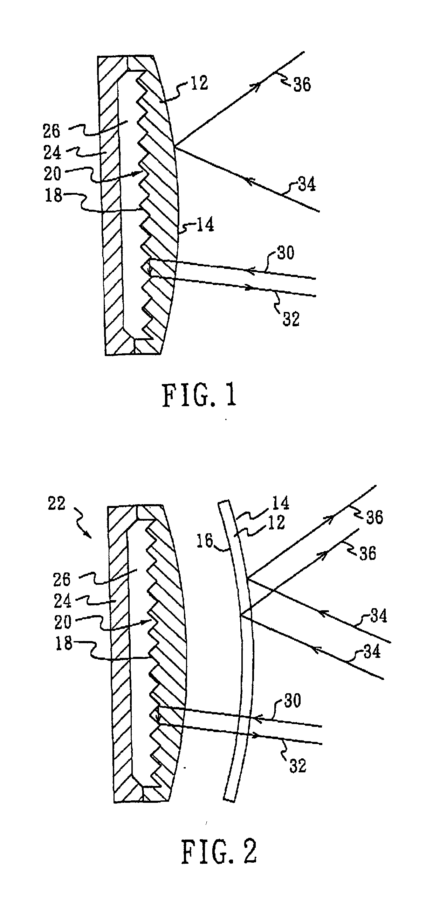

This invention is related to a rear view mirror with retroreflective function. One of the preferred embodiments of this invention is schematically illustrated in the cross sectional view of Fig. 1. The rear view mirror of this invention mainly comprises a front body **12** which can be made of glass or transparent plastic materials, including thermal plastics or thermal setting materials. Front body 12 has a first smooth surface **14** which is coated with at least one layer of film or pural layers of films. The film reflects, at least partially, some visible light with a wavelength within a predetermined range and lets, at least partially, some other visible light with a wavelength within a predetermined range pass through. The detailed optical characteristics of the film will be described in the sections below. Fig. 2 shows another preferred embodiment of this invention, in which the front body **12** with the first smooth surface **14** is constructed separately from the rear body **22.** In this embodiment, the film can be coated on the first smooth surface **14** only, or on an opposing surface **16** at the other side, or on both surfaces **14** and **16.** The front body **12** and rear body **22** shown in Fig. 2 can be connected or attached together in substantially parallel by usual conventional measures.

A second surface **18** is provided opposing to the first smooth surface **14**. The second surface **18** has a plurality of prisms **20** formed thereon. As shown in the preferred embodiment of Fig. 1, the second surface **18** and the first smooth surface **14** are integrally formed on the front body **12**. In the embodiment shown in Fig. 2, the second surface **18** is provided within the rear body **22**. Each of the prisms **20** is formed by three inclined faces which are substantially perpendicular to one another. The construction and the technical principle involved in the prism **20** are well known by the persons skilled in the art of retroflective plate and are not described in details. This invention further comprises an impermeable cover, such as a housing **24** shown in Fig. 2, at the side of the second surface **18.** The housing **24** is made of plastic materials, such as ABS (acrylnitrile-butadiene-styrene copolymer). By sealing the housing **24** with the second surface **18**, an air partition **26** is formed at the side of the second surface **18** to prevent any undesired effects on the retroflective function caused by the attachment of water vapor or droplet on the second surface **18**. This ensures that the second surface **18** can retroflect visible lights according to the different refraction coefficients of the second surface **18** and the air. Alternatively, a metallic film may be coated on the prisms **20** of the second surface **18** as the impermeable cover such that the prisms **20** form plural perpendicular mirrors for retroreflection. In this case, the housing **24** will be eliminated.

According to the preferred embodiments of this invention, the film coated on the first smooth surface **14** or the opposing surface **16** can be a metallic material, such as gold, silver, aliminum or chromium. It can also be one or plural layers of dielectric materials known by the persons skilled in the art, such as ZnS/MgF₂, TiO₂/SiO₂, and Inₓ-Sn_{y}-O_{z} etc. which are usually referred as band pass filter in the field. Band pass filter is commonly utilized in various optical apparatus, for example, camera, window of vehicle or even building. It is realized that band pass filter may reflect, at least partially, some visible light with a wavelength within a predetermined range and let, at least partially, some other visible light with a wavelength within a predetermined range pass through. The type of materials, thickness and layers etc. for the film to be coated are designed according to the desired wavelength and percentage of the visible lights which will be retroflected. The first smooth surface **14** and the opposing surface **16** must be adequately even and smooth such that the film may be coated thereon by vacuum evaporation, electron beam or sputtering, to form a mirror face with satisfactory reflectiveness.

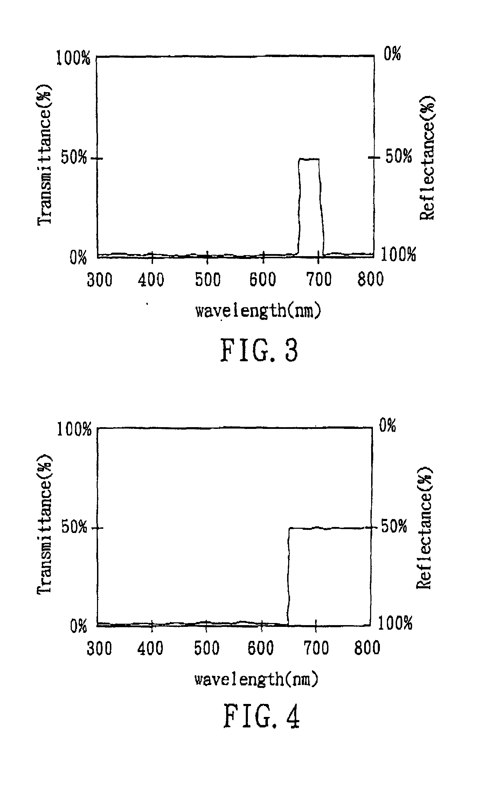

More specifically, if it is desirable to have a rear view mirror of this invention that can retroreflect red visible light, for example, one or plural layers of dielectric materials with specific refraction coefficiency can be selected and coated on the first smooth surface **14**. As a result, approximately 50% of red visible light with the wavelength of 680 nm, as illustrated in Figs. 3 and 4, can pass through the film. Thus, as shown in Figs. 1 or 2, when the red visible light impinges along the incoming path **30**, approximately 50% of the red visible light will pass through the first smooth surface **14** and the film thereon and reach the second surface **18**. The second surface **18** then retroreflects the penetrated red visible light along the retroreflection path **32**, which is substantially in parallel with the incoming path **30** but in opposite direction, back to the light source. Therefore, when a light source in the rear illuminates the rear view mirror, it presents a reflection of red light and thus provides warning effect like a retroreflective plate to the vehicle driver in the rear.

On the other hand, the remaining 50% of red visible light and the visible light with other wavelengths, when impinges on the first smooth surface **14** along the incoming path **34**, will be reflected as normal reflection mirror along the reflecting path **36.** Thus, the rear view mirror of this invention can still provide adequate and sufficient rear viewing function to human eyes without significant distortion. Persons skilled in the art may realize that, by adjusting the type of material, layer, or thickness of the film, the film can let the visible light with other wavelength pass through and then retroflect it. For example, the film may be designed as letting yellow visible light with a wavelength of approximately 580 nm pass through, so that the rear view mirror can retroreflect yellow visible light. In brief, the rear view mirror of this invention can be designed to retroreflect various visible lights with specific wavelengths as desired.

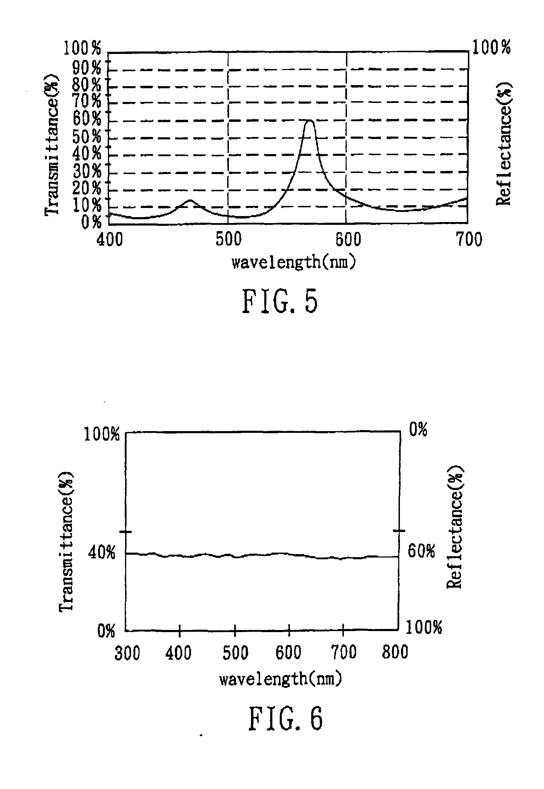

The table below discloses one example of the film to be coated on a glass. The film includes twelve layers of dielectric material and each of them has a specific thickness. Such a film can let approximately 60% of yellow visible light with a wavelength of 580 nm pass through, as illustrated in Fig. 5, and then retroreflect it.

| Layer No. | Material | Refraction Coefficient | Thickness (nm) |
|---|---|---|---|
| exterior | air | 1.00000 | |
| 1 | ZnS | 2.37920 | 57.96 |
| 2 | MgF₂ | 1.38455 | 97.08 |
| 3 | ZnS | 2.37920 | 36.38 |
| 4 | MgF₂ | 1.38455 | 67.16 |
| 5 | ZnS | 2.37920 | 39.76 |
| 6 | MgF₂ | 1.38455 | 75.78 |
| 7 | ZnS | 2.37920 | 52.64 |
| 8 | MgF₂ | 1.38455 | 114.56 |
| 9 | ZnS | 2.37920 | 75.03 |
| 10 | MgF₂ | 1.38455 | 101.70 |
| 11 | ZnS | 2.37920 | 65.04 |
| 12 | MgF₂ | 1.38455 | 125.82 |
| front body | glass | 1.53077 | |

An alternative design is to coat a film with specific thickness and material so that approximately 40% of the full band of the visible lights can pass through the film, and the remaining 60% of the full band of the visible lights is reflected directly. To achieve the traffic warning effect, it is only necessary to use the rear body **22** having conventional yellow or red color.

In the situation that the metallic material is used as the thin film to be coated on the first smooth surface 14 or the opposing surface 16, the metallic film may have a thickness around several angstrom (Å). Such a metallic film may let approximately 40% of visible lights pass through, as shown in Fig. 6, and reflect the remaining 60% of visible lights as usual reflection mirror. The persons skilled in the art should know that if a mirror can reflect approximately 60% of visible light, it already can provide satisfactory rear viewing function. Therefore, even if approximately 40% of visible light is retroreflected, the original rear viewing function of the mirror will not be deteriorated to an unsatisfactory level. Accordingly, this invention can, on the one hand, provide the conventional rear viewing function of the rear view mirror, and on the other hand, can retroreflect some extent of light to the vehicle in the rear when the mirror is illumiated by the rear light source, so as to provide the warning effect as a retroreflective plate.

This invention is related to a novel device that makes a breakthrough in conventional art. Aforementioned explanations, however, are directed to the description of preferred embodiments according to this invention. Various changes and implementations can be made by those skilled in the art without departing from the technical concept of this invention. Since this invention is not limited to the specific details described in connection with the preferred embodiments, changes to certain features of the preferred embodiments without altering the overall basic function of the invention are contemplated within the scope of the appended claims.

### Sequence Listing

- 12: front body
- 14: first smooth surface
- 16: opposing surface
- 18: second surface
- 20: prisms
- 22: rear body
- 24: housing
- 26: air partition
- 30: incoming path
- 32: retroreflection path
- 34: incoming path
- 36: reflecting path

## Claims

1. A rear view mirror with retroreflective function, **characterized in** comprising:
a first smooth surface which is coated with at least one layer of film, the at least one layer of film reflects, at least partially, some visible light with a wavelength within a predetermined range and lets, at least partially, some other visible light with a wavelength within a predetermined range pass through;
a second surface opposing to the first smooth surface and having a plurality of prisms thereon; and
an impermeable cover provided on the second surface.

2. The rear view mirror with retroreflective function as set forth in claim 1, **characterized in that** the first smooth surface and the second surface are integrally formed on a single piece of article.

3. The rear view mirror with retroreflective function as set forth in claim 1, **characterized in that** the first smooth surface and the second surface are separately formed on two distinct pieces of articles.

4. The rear view mirror with retroreflective function as set forth in claim 1, **characterized in that** the impermeable cover is a layer of metallic film coated on the second surface.

5. The rear view mirror with retroreflective function as set forth in claim 1, **characterized in that** the impermeable cover is a housing connected with the rear view mirror and completely covering the second surface.

6. The rear view mirror with retroreflective function as set forth in claim 1, **characterized in that** the at least one layer of film on the first smooth surface is metallic material.

7. The rear view mirror with retroreflective function as set forth in claim 1, **characterized in that** the at least one layer of film on the first smooth surface is dielectric material.

8. The rear view mirror with retroreflective function as set forth in claim 1, **characterized in that** each of the prisms is formed by three inclined faces which are substantially perpendicular to one another.

9. The rear view mirror with retroreflective function as set forth in claim 1, **characterized in that** the at least one layer of film on the first smooth surface partially reflects full band of visible lights and partially lets full band of visible lights pass through.

10. The rear view mirror with retroreflective function as set forth in claim 1, **characterized in that** the at least one layer of film on the first smooth surface partially lets red visible light pass through and reflects remaining visible lights.

11. The rear view mirror with retroreflective function as set forth in claim 1, **characterized in that** the at least one layer of film on the first smooth surface partially lets yellow visible light pass through and reflects remaining visible lights.

## Amended claims

### Amended claims under Art. 19.1 PCT

**1.** A rear view mirror with retroreflective function **characterized by**
a first smooth surface (14) which is coated with at least one layer of film, the at least one layer of film reflecting, at least partially, some visible light with a wavelength within a predetermined range and letting, at least partially, some other visible light with a wavelength within a predetermined range pass through;
a second surface (18) for retroflecting the some other visible light passing through the first smooth surface (14), opposing to the first smooth surface and having a plurality of prisms (20) thereon, and
an impermeable cover provided on the second surface (18), wherein the first smooth surface (14) acts as a rear view mirror and the second surface (18), upon illumination by a rear light source, acts a retroreflective plate so as to provide warning effects.
